# EUROPÄISCHE PATENTSCHRIFT

(11) **EP 2 952 090 B1**
(45) Veröffentlichungstag und Bekanntmachung des Hinweises auf die Patenterteilung: **09.08.2017**
(21) Anmeldenummer: 15170266.9
(22) Anmeldetag: 02.06.2015
(51) Int. Cl.: A01G 9/14, A01G 29/00, A01G 9/12

(54) **RANK- UND BEWÄSSERUNGSVORRICHTUNG**
SUPPORT AND IRRIGATION DEVICE
DISPOSITIF DE TUTEURAGE ET D'IRRIGATION

(30) Priorität: 03.06.2014 DE 202014102586 U
(43) Veröffentlichungstag der Anmeldung: 09.12.2015
(73) Patentinhaber: Fuchs, Alfred, 78467 Konstanz (DE)
(72) Erfinder: Fuchs, Alfred, 78467 Konstanz (DE)
(74) Vertreter: Wagner, Kilian

(56) Entgegenhaltungen:
- EP-A1- 2 274 971
- EP-A1- 2 338 327
- US-A- 6 076 300

## Beschreibung

Die Erfindung betrifft eine Rank- und Bewässerungsvorrichtung für Pflanzen gemäß dem Oberbegriff des Anspruchs 1, umfassend ein, von mehreren, vorzugsweise zumindest zum Teil schräg, bevorzugt unter einem Winkel zwischen 5° und 25° zur Vertikalen, verlaufenden, Rankstöcken getragenes Regenauffangdach aus einem lichtdurchlässigen Substrat, insbesondere aus Kunststoff, wobei das Regenauffangdach eine Anzahl von Durchgangslöchern aufweist, die von den Rankstöcken durchsetzt sind, derart, dass das Wasser aus dem Regenauffangdach durch die Durchgangslöcher außen entlang der Rankstöcke nach unten in Richtung Wurzelwerk der Pflanzen strömen kann und/oder wobei dem Regenauffangdach eine Anzahl von, vorzugsweise konisch konturierten Ablauftüllen zugeordnet ist, durch die das Wasser aus dem Regenauffangdach in das Innere der als Hohlkörper ausgebildeten Rankstöcke und in den Rankstöcken nach unten in Richtung Wurzelwerk der Pflanzen strömen kann. Die Ablauftüllen sind dabei wiederum bevorzugt Durchgangslöchern im Regenauffangdach zugeordnet.

Eine derartige, gegenüber dem bis dato bekannten Gewächshäusern revolutionäre Rank- und Bewässerungsvorrichtung ist in dem europäischen Patent EP 2 274 971 B1 des Anmelders beschrieben. Bei dieser bekannten Rank- und Bewässerungsvorrichtung gelangt das in dem Regenauffangdach gesammelte Regenwasser außen oder innen entlang der Rankstöcke zum Wurzelwerk der Pflanzen, wodurch diese hervorragend gedeihen. Gleichzeitig üben die Rankstöcke aufgrund der zur Vertikalen geneigten Anordnung eine optimale Trag- und Versteifungsfunktion aus, sodass das Regenauffangdach ohne weitere Maßnahmen sicher gehalten ist. Das Regenauffangdach der bekannten Rank- und Bewässerungsvorrichtung besteht aus einzelnen Plattenmodulen, die jeweils eine Regenauffangwanne bilden.

Die bekannte, in dem vorgenannten europäischen Patent des Anmelders beschriebene Rank- und Bewässerungsvorrichtung hat sich in der Praxis hervorragend bewährt. Es bestehen jedoch Bestrebungen des Anmelders, die gattungsgemäße Rank- und Bewässerungsvorrichtung kostengünstig anzubieten und noch einfacher montierbar zu gestalten.

Diese Aufgabe wird mit einer erfindungsgemäßen Rank- und Bewässerungsvorrichtung mit den Merkmalen des Anspruchs 1 gelöst, d.h. bei einer gattungsgemäßen Rank- und Bewässerungsvorrichtung dadurch, dass das Regenauffangdach mehrere sich parallel erstreckende und einteilig ausgebildete Auffangrinnen auf, die von einer gekanteten Platte, einer so genannten Substratplatte aus dem lichtdurchlässigen Substrat, insbesondere aus einem Polycarbonat gebildet sind. Vorzugweise ist dabei mindestens eine (fakultative) Seitenwand der Rank- und Bewässerungsvorrichtung aus einem lichtdurchlässigen Substrat, insbesondere aus Kunststoff, noch heute bevorzugt aus einem Polycarbonat vorgesehen, die an mehreren der, vorzugsweise durch parallel zur Vertikalen erstreckenden Rankstöcke, insbesondere über an den Rankstöcken festgelegte Haltearme fixiert ist.

Vorteilhafte Weiterbildungen der Erfindung sind in den Unteransprüchen angegeben. In dem Rahmen der Erfindung fallen sämtliche, so noch zumindest zwei von in der Beschreibung, den Ansprüchen und/oder in den Figuren offenbarten Merkmalen.

Hinsichtlich der Optimierung des Regenauffangdaches liegt der Erfindung der Gedanke zugrunde, zur Ausbildung des Regendaches mindestens eine, vorzugsweise ausschließlich eine, gekantete Substratplatte einzusetzen, die so gekantet ist, dass sich mehrere parallel erstreckende und einteilig ausgebildete Auffangrinnen resultieren, in denen sich das Regenwasser sammeln und außen an und/oder innen durch die Rankstöcke in Richtung Wurzelwerk der Pflanzen strömen kann. Der Erfindung liegt dabei die Erkenntnis zugrunde, dass sich ebene, lichtdurchlässige Substratplatten, insbesondere transparente Substratplatten, ganz besonders bevorzugt aus Polycarbonat ähnlich wie Metallbleche mit aus der Metallverarbeitung bekannten Verfahren kanten lassen. Auf diese Weise ist es möglich, vergleichsweise große Bereiche, insbesondere die gesamte Rank- und Bewässerungsvorrichtung mit einer einzigen, gekanteten Substratplatte zu überdachen, welche durch ihre Kantung Auffangrinnen zur Sammlung des Regenwassers aufweist. Anders ausgedrückt bildet eine gekantete Substratplatte eine Mehrzahl von parallelen Auffangrinnen aus, wodurch auf eine Vielzahl von nur sehr kostenintensiv fertigbaren Substratwannen verzichtet werden kann.

Eine erfindungsgemäße Rank- und Bewässerungsvorrichtung hat gegenüber dem Stand der Technik viele Vorteile. Da das Wasser des Daches direkt außen entlang der Rankstöcke und/oder (was bevorzugt ist) innen in den Rankstöcken zu den Wurzeln der Pflanzen fließt, bleiben die Pflanzen trocken, was insbesondere vorteilhaft ist in Hinblick auf die Vermeidung von Pilzkrankheiten. Die Rankstöcke haben dabei nicht nur eine wasserführende Primärfunktion sondern dienen gleichzeitig als Befestigung bzw. Stützen für die Pflanzen, insbesondere für Tomaten-, Gurken- und Paprikapflanzen. Wie später noch erläutert werden wird, kann das erfindungsgemäße Gewächshaus an allen vier Seiten, beispielsweise durch Zusammenstecken mit H-förmigen Profilen und/oder Verkleben und/oder Verschrauben erweitert bzw. vergrößert werden. Ebenso ist es möglich zu Belüftungszwecken, insbesondere verschließbare, Belüftungsöffnungen, insbesondere Belüftungsschlitze, vorzusehen, die noch weiter bevorzugt mittels eines Schiebers verschließbar sind.

Ganz besonders bevorzugt ist es, wenn die Substratplatte derart gekantet ist, dass die Auffangrinnen jeweils zwei einen sich nach oben öffnenden Winkel aufspannende, einteilige Wandabschnitte aufweisen, wobei es besonders bevorzugt ist, wenn die Auffangrinnen jeweils von ausschließlich zwei solcher Wandabschnitte gebildet sind. Nebeneinander quer zur Längserstreckung der Auffangrinnen befinden sich mehrere nebeneinander angeordnete Auffangrinnen, wobei die ineinander angrenzenden Wandabschnitte von jeweils zwei nebeneinander angeordneten Auffangrinnen einen nach unten offenen Winkel aufspannen. Hierdurch ergibt sich bevorzugt eine im Querschnitt zickzackförmige Regenauffangdachgestaltung mit mehreren nebeneinander angeordneten Auffangrinnen.

Besonders bevorzugt ist es nun, wenn die Durchgangsöffnungen und/oder die Ablauftüllen im Senkenbereich der Auffangrinnen angeordnet sind, d.h. im Bereich der unteren Kanten des Regenauffangdaches, wobei die unteren Kanten jeweils von den zwei eine sich nach oben öffnenden Winkel aufspannenden Wandabschnitten gebildet werden.

Ganz besonders bevorzugt ist eine Ausführungsform, bei der die vorgenannten unteren Kanten zumindest näherungsweise horizontal ausgerichtet sind. Um auch bei einer horizontalen Ausrichtung eine möglichst große Wassermenge zu den Rankstöcken zu leiten ist es bevorzugt, wenn in den Durchgangslöchern und/oder Ablauftüllen Staumittel vorgesehen sind, die sich an einer Seite des jeweiligen Durchgangsloches bzw. durch jeweiligen Ablauftülle in Richtung der Längserstreckung der Auffangrinnen betrachtet befindet, sodass jeder Durchgangsöffnung bzw. jeder Ablauftülle ein eigener Auffangrinnenabschnitt zugeordnet ist, um somit eine möglichst gleichmäßige Verteilung des Regenwassers auf die Rankstöcke zu erreichen. Vorgenannte Staumittel sind auch bei schräger (nicht horizontaler) Ausrichtung des Regenauffangdaches von Vorteil.

Bei Bedarf können die Auffangrinnen an ihrer gegenüberliegenden Endseite abgedichtet sein, insbesondere mit einem unteren Endbereich der Auffangrinnen abdichtenden Profil, welches sich quer zur Längserstreckung der Auffangrinnen erstreckend angeordnet ist.

Wie eingangs erwähnt, ist es aufgrund des verbesserten Regenauffangdaches möglich, auf eine einfache Weise großflächige Regenauffangdächer mit nur einer einzigen, gekanteten Substratplatte, insbesondere gekanteten Polycarbonatplatte, bereitzustellen. Alternativ ist es möglich, mehrere, insbesondere großflächige Substratplatten, insbesondere Polycarbonatplatten, zu einem noch größeren Regenauffangdach modulartig zu montieren. Unabhängig von der konkreten Ausgestaltung des Regenauffangdaches aus einer einzigen gekanteten Substratplatte oder aus mehreren gekanteten Substratplatten ist es bevorzugt, wenn die mindestens eine Substratplatte jeweils eine Mindestflächenerstreckung (Projektionsflächenerstreckung) von 4 m², noch weiter bevorzugt von 8 m², ganz besonders bevorzugt von 10 m² aufweist.

Zusätzlich zu der erfindungsgemäßen Ausgestaltung des Regenauffangdaches kann die Montage der Rank- und Bewässerungsvorrichtung dadurch optimiert werden, dass für den Fall, dass die Rank- und Bewässerungsvorrichtung neben dem Regenauffangdach mindestens eine Seitenwand aufweist, diese Seitenwand an mehreren der Rankstöcke fixiert ist, ganz besonders bevorzugt über Haltearme, die bei Bedarf einteilig mit den Rankstöcken ausgebildet sein können oder alternativ, was bevorzugt ist, insbesondere lösbar, an den Rankstöcken festgelegt bzw. festlegbar sind. Ganz besonders bevorzugt ist es, wenn die die Seitenwände tragenden Rankstöcke nicht schräg zur Vertikalen verlaufen sondern parallel zur Vertikalen, wobei auch eine schräge Anordnung denkbar ist. Ganz besonders bevorzugt ist es, wenn die Rank- und Bewässerungsvorrichtung sowohl sich parallel zur Vertikalen erstreckende Rankstöcke zum Tragen der Seitenwände (und vorzugsweise zum zusätzlichen Tragen des Regenauffangdaches) als auch schräg zur Vertikalen verlaufende Rankstöcke aufweist, wobei es noch weiter bevorzugt ist, wenn die schräg verlaufenden Rankstöcke in einem inneren Projektionsflächenbereich und die parallel zur Vertikalen verlaufenden Rankstöcke in einem äußeren Randbereich der Rank- und Bewässerungsvorrichtung angeordnet sind.

Ganz besonders bevorzugt ist eine Ausführungsform, bei der zwei schräg zur Vertikalen angeordnete Rankstöcke als Rankstockpaar angeordnet sind in der Art eines Vs und in Richtung auf einen gemeinsamen Einleitbereich in den Untergrund zusammenlaufen, wobei die beiden Rankstöcke noch weiter bevorzugt aus unterschiedlichen, benachbarten Auffangrinnen, insbesondere derselben, gekanteten Substratplatte mit Regenwasser versorgt werden. Durch die V-förmige Anordnung von jeweils zwei benachbarten Rankstöcken wird seitlich des Vs ein vergleichsweise breiter Durchgangsraum geschaffen, sodass das Gewächshaus optimal begehbar ist. Noch verbessert werden kann eine derartige Anordnung, wenn zwei jeweils V-förmig angeordnete Rankstockpaare senkrecht zur Längserstreckung der Ablaufrinnen nebeneinander angeordnet sind, sodass in den Bereich zwischen den beiden Vs ein besonders breiter Durchgang geschaffen wird. Bei einer bevorzugten Rasterung von 60cm (Abstand zwischen zwei benachbarten unteren Kanten) kann auf diese Weise in den Bereich zwischen zwei V-förmig angeordneten Rankstöcken eine freie Breite von über 1m, vorzugsweise zwischen 1,05m und 1,15m geschaffen werden. Ist benachbart zu einem V-förmig angeordneten Paar von Rankstöcken ein vertikal angeordneter Rankstock vorgesehen, so kann hier bei einer Rasterung von 60cm ein freier Durchgang von etwa 90cm Breite geschaffen werden.

Im Hinblick auf die Ausbildung der Rankstöcke hat es sich als vorteilhaft herausgestellt, wenn diese mit einer Spitze in den Erdboden ragen und sich auf dem Erdboden mit einer abkragenden Metallplatte abstützen. Die Metallplatte dient dabei insbesondere zur Aufnahme von Druckkräften, während die Spitze aufgrund der Verankerung im Boden insbesondere auch gegen Zugkräfte sichert.

Als besonders vorteilhaft hat sich eine Ausführungsform der Rank- und Bewässerungsvorrichtung herausgestellt, bei der die Haltearme nicht einteilig mit den Rankstöcken ausgebildet sind, sondern bei der die Haltearme zur Fixierung der Seitenwände lösbar, insbesondere mittels eines Schraub-/Klemmmechanismus an den Haltearmen fixiert bzw. fixierbar sind. Hierdurch ist eine besonders einfache Montage an der jeweils gewünschten Höhenposition der Rankstöcke möglich.

Im Hinblick auf die konkrete Fixierung der Seitenwände wiederum an den Haltearmen gibt es unterschiedliche Möglichkeiten. Besonders einfach und effizient ist eine Fixierung der Seitenwände durch Verschrauben. Bevorzugt durchsetzen hierbei die Schrauben die Seitenwände, welche wie erwähnt bevorzugt aus Polycarbonat ausgebildet sind.

Als besonders vorteilhaft für eine robuste Ausführung der Rank- und Bewässerungsvorrichtung sowie gleichzeitig für eine erleichterte Montage hat es sich erwiesen, wenn, für den Fall, dass auf einer gemeinsamen Seite der Rank- und Bewässerungsvorrichtung zwei Seitenwände, d.h. Seitenwandplatten vorgesehen werden sollen, diese über ein doppeltes U-Profil, insbesondere ein H-Profil, aneinander festgelegt werden, wobei das Profil einen Formschluss mit beiden Seitenwänden sicherstellt. Für den Fall, dass zwei Seitenwände über Eck angeordnet werden sollen, insbesondere in einem rechten Winkel zueinander, hat es sich als vorteilhaft erwiesen, hierfür ein speziell ausgestaltetes Profil zu verwenden, welches zwei U-Profilabschnitte zur jeweiligen Aufnahme einer Seitenkante einer Seitenwand aufweist, wobei die beiden U-Profilabschnitte winklig, insbesondere rechtwinklig, aneinander festgelegt sind. Mit einem derartigen doppelten bzw. winkligen U-Profilelement können zusätzlich oder alternativ auch Seitenwände mit dem Regenauffangdach formschlüssig fixiert werden, wobei hier jedoch bevorzugt ein spitzerer Winkel gewählt wird. Ganz besonders bevorzugt ist es, zur unteren Fixierung einer Seitenwand, wenn dieser bodenseitig ein nach oben offener U-Profilabschnitt eines Verankerungsprofils zugeordnet ist, wobei das Verankerungsprofil neben dem U-Profilabschnitt einen Ankerabschnitt aufweist, der im Boden, d.h. im Untergrund versenkbar ist.

Anstelle eines doppelten U-Profils können über Eck angeordnete Seitenwände auch über zwei Winkelprofile aneinander festgelegt werden, wobei die Winkelprofile die einander zu fixierenden Seitenwände klemmend zwischen sich aufnehmen. Ganz besonders bevorzugt werden die Winkelprofile durch Verschrauben aneinander festgelegt, wobei es besonders bevorzugt ist, wenn die Verschraubung im Eckbereich, der vorzugsweise jeweils einen 90°-Winkel bildenden Winkelprofile angeordnet ist. Die Wahl von Winkelprofilen hat gegenüber den doppelten U-Profilen den Vorteil, dass diese größeren Toleranzen im Hinblick auf die Ausrichtung der Seitenwände zulassen und dadurch die Montage erleichtert ist.

Als besonders vorteilhaft hat es sich herausgestellt, wenn Rankstöcke aus Metall, insbesondere aus einer Aluminiumlegierung eingesetzt werden. Dies hat erfahrungsgemäß einen positiven Einfluss auf das Pflanzenwachstum sowie auf die Stabilität der Rank- und Bewässerungsvorrichtung.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Seitenansicht einer ersten Ausführungsform einer nach dem Konzept der Erfindung ausgebildeten Rank- und Bewässerungsvorrichtung für Pflanzen, wobei bei der gezeigten Ausführungsform das Regenwasser über Ablauftüllen in das Innere von Rankstöcken gelangt und innerhalb dieser in Richtung Wurzelwerk der Pflanzen strömen kann,
- Fig. 2: eine alternative Ausführungsform einer Rank- und Bewässerungsvorrichtung bei der Durchgangslöcher in einen Regenauffangdach von den Rankstöcken durchsetzt sind und das Wasser außen an den Rankstöcken entlang in Richtung Wurzelwerk der Pflanzen strömen kann,
- Fig. 3: eine Draufsicht einer möglichen Ausführungsform einer erfindungsgemäßen Rank- und Bewässerungsvorrichtung, und
- Fig. 4 bis 8: unterschiedlich gestaltete Profile zur Fixierung von fakultativen Seitenwänden der Rank- und Bewässerungsvorrichtung

In den Figuren sind gleiche Elemente und Elemente mit der gleichen Funktion mit den gleichen Bezugszeichen gekennzeichnet.

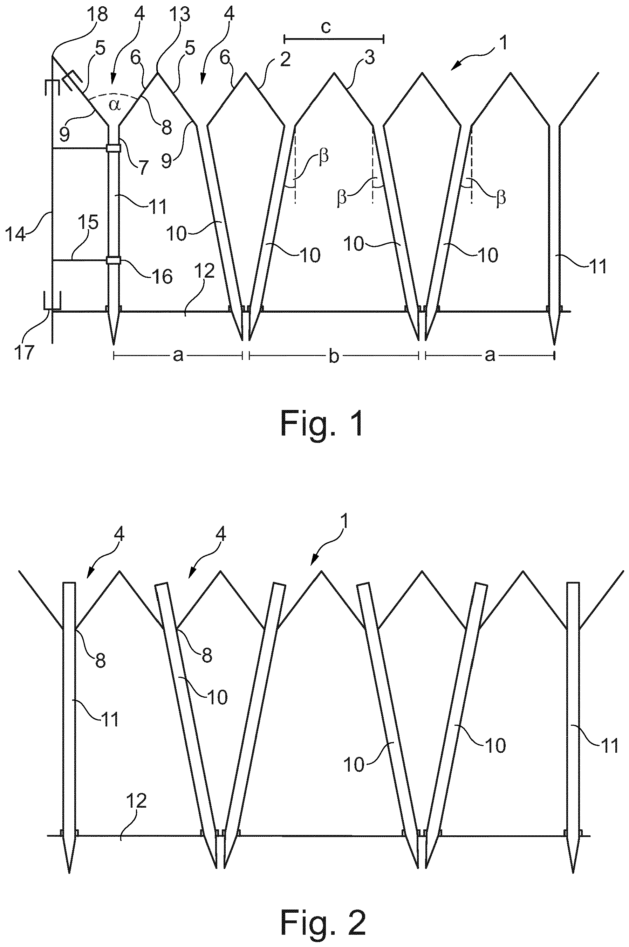

In Fig. 1 ist eine bevorzugte Ausführungsform einer nach dem Konzept der Erfindung ausgebildeten Rank- und Bewässerungsvorrichtung 1 angezeigt. Diese umfasst ein im gezeigten Ausführungsbeispiel aus einer einzigen gekanteten Substratplatte 2, hier einer Polycarbonatplatte gefertigtes Regenauffangdach 3, welches eine Vielzahl von parallel verlaufenden Auffangrinnen 4 umfasst, in denen sich das Regenwasser sammeln kann. Zu erkennen ist, dass jede Auffangrinne 4 zwei eine nach oben offenen Winkel α aufspannende Wandabschnitte 5, 6 aufweist, die durch Kanten der zunächst ebenen Substratplatte entstanden sind. Die Wandabschnitte 5, 6 jeder Auffangrinne 4 treffen sich an einer unteren Kante 7, die linienförmig entlang der Auffangrinne 4 verläuft und diese nach unten begrenzt. Im Bereich dieser unteren Kanten 7 ist die gekantete Substratplatte 2 mit Durchgangslöchern 8 versehen, denen jeweils eine Ablauftülle 9 zugeordnet ist, die das Regenwasser in das Innere von jeweils einen der Ablauftülle 9 zugeordneten Rankstock 10, 11 leitet, innerhalb dessen das Regenwasser in Richtung Grund bzw. Boden 12 strömen kann. Dabei ist es denkbar, dass das Wasser innerhalb der Rankstöcke 10, 11 bis in den Boden 12 strömt oder oberhalb des Bodens 12 durch entsprechende Öffnungen aus den Rankstock 10, 11 hinausgeleitet wird, insbesondere um dann weiter außen entlang des Rankstockes 10, 11 zum Wurzelwerk zu strömen.

Weiterhin ist aus Fig. 1 zu erkennen, dass Wandabschnitte 6, 5 von benachbarten Auffangrinnen 4 sich an einer parallel zu den unteren Kanten 7 verlaufenden, jeweils mittig zwischen den zwei unteren Kanten 7 befindlichen oberen Kanten 13 treffen, sodass sich in der gezeigten Seite- bzw. Querschnittsansicht eine Zickzackdachform (sich wiederholende Z-Profilformen) ergibt.

Aus Fig. 1 ist auch zu entnehmen, dass die äußeren Rankstöcke 11 parallel zur Vertikalen verlaufen, während die inneren Rankstöcke 10 schräg zur Vertikalen verlaufen, hier unter einem Winkel β. Insgesamt sind jeweils nebeneinander zwei Paare von V-förmig angeordneten Rankstöcken im Inneren vorgesehen, sodass sich bei einer Rasterung mit einem Rastermaß c, von hier 60cm (Abstand von jeweils zwei benachbarten Ablauftüllen, gemessen senkrecht zur Längserstreckung der Auffangrinnen) zwischen den benachbarten Vs eine freie Durchgangsbreite b von etwa 1,15m ergibt. Zwischen den V-förmig angeordneten Rankstöcken und den benachbarten vertikalen Rankstockpaaren 11 ergibt sich eine lichte Breite a von etwa 90cm.

An den äußeren Rankstöcken 11 können wie dargestellt Seitenwände 14, d.h. Seitenwandplatten fixiert werden, die in den gezeigten Ausführungsbeispiel aus Polycarbonat ausgebildet sind. Die Seitenwände 14 sind durch Verschrauben an Haltearmen 15 festgelegt, welche lösbar an den Rankstöcken 11, hier über eine Schraub-/Klemmverbindung 16 fixiert sind.

Unten stützt sich die Seitenwand 14 in einem Verankerungsprofil 17 ab. Oben ist die Seitenwand 14 über ein doppeltes U-Profil 18, welches zwei Winkel zueinander angeordnete U-Profilabschnitte umfasst, an der Substratplatte 2 des Regenauffangdaches 3 festgelegt.

An dieser Stelle sei noch auf die vorteilhafte Ausgestaltung der Rankstöcke als solches hingewiesen. Diese weisen jeweils eine Spitze auf, die in das Erdreich ragt und eine an den Rankstöcken mit Abstand zur jeweiligen Spitze angeordnete Platte, die radial von den Rankstöcken abkragt und mit dem sich die Rankstöcke auf dem Erdbereich abstützen.

Fig. 2 zeigt eine alternative Ausführungsform der Rank- und Bewässerungsvorrichtung 1, wobei zur Vermeidung von Wiederholungen im Wesentlichen nur auf die Unterschiede zu dem Ausführungsbeispiel gemäß Fig. 1 eingegangen wird.

Die Lösung gemäß Fig. 2 umfasst keine Ablauftüllen sondern die Rankstöcke 10, 11 durchsetzen die Durchgangsöffnungen 8 der Auffangrinnen 4, sodass das Wasser außen entlang der Rankstöcke 10, 11 zum Wurzelwerk der Pflanzen strömen kann. Hier ist es denkbar, dass das Regenwasser den gesamten Weg außerhalb der Rankstöcke 10, 11 außen an den Rankstöcken 10, 11 zurücklegt. Auch ist es denkbar, dass das Regenwasser bei einer Ausführung der Rank- und Bewässerungsstöcke als Hohlkörper bzw. Rohre, insbesondere Aluminiumrohre nach Innen geleitet wird und dann im Inneren zum Wurzelwerk der Pflanze strömen kann.

Unabhängig von der konkreten Ausgestaltung der Rankstöcke 10, 11 ist es bevorzugt, das, für den Fall, dass das Wasser das Wurzelwerk über den Weg innerhalb der Rankstöcke 10, 11 erreicht, dass im unteren Bereich des Rankstocks Wasseraustrittslöcher in den Rankstöcken 10, 11 vorgesehen sind.

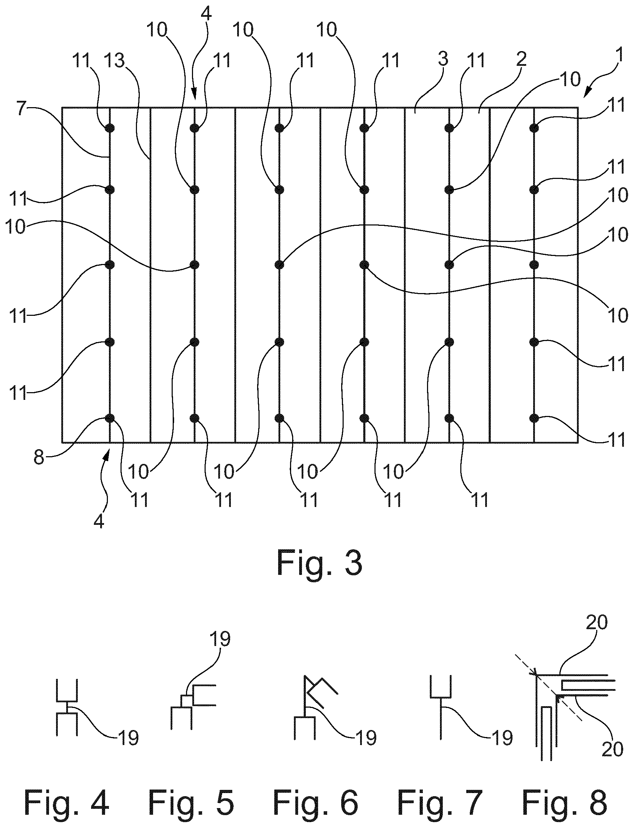

Fig. 3 zeigt eine Rank- und Bewässerungsvorrichtung 1 in einer Ansicht von oben. Zu erkennen sind die Vielzahl von nebeneinander angeordneten, parallelen sowie einstückig ausgebildeten Auffangrinnen 4, die im Bereich ihrer jeweiligen lang gestreckten unteren Kante 7 mit Durchgangslöchern 8 versehen sind, denen Rankstöcke 10, 11 zugeordnet sind. Bei einer ersten Ausführungsform wird das Wasser über nicht gezeigte Ablauftüllen 9 in das Innere der Rankstöcke 10, 11 geleitet, während bei der alternativen Ausführungsform die Rankstöcke das Regenauffangdach 3 bzw. Durchgangslöcher 8 durchsetzen und das Wasser durch die resultierenden Spalten außen entlang der Rankstöcke 10, 11 in Richtung Wurzelwerk strömt.

Zu erkennen ist, dass eine äußere Phalanx bzw. Reihe auf jeder Seite der Rank- und Bewässerungsvorrichtung 1 gebildet wird von parallel zur Vertikalen verlaufenden Rankstöcken 11, während die innerhalb dieser Reihen befindlichen inneren Rankstöcke 10 schräg zur Vertikalen angeordnet sind.

Fig. 4 bis 7 zeigen unterschiedliche Profile 19, insbesondere aus Metall, vorzugsweise aus Aluminium zur Fixierung von vorzugsweise transparenten Seitenwänden.

Fig. 4 zeigt ein doppeltes U-Profil zur Fixierung zweiter in einer Ebene nebeneinander angeordnete Seitenwände bzw. Seitenwandplatten aneinander, wobei die Seitenwände in den U-Formabschnitten aufgenommen werden können.

Fig. 5 zeigt eine rechtwinklige Anordnung solcher U-Profilabschnitte zur Fixierung zweiter auf Eck angeordneter Seitenwände.

Fig. 6 zeigt ebenfalls zwei, jedoch unter einem spitzeren Winkel angeordnete U-Profilabschnitte zur Fixierung einer Seitenwand an einem schräg verlaufenden Wandabschnitt der Substratplatte 2 des Regenauffangdaches 3.

Fig. 7 zeigt ein Verankerungsprofi 17 mit einem U-Profilabschnitt und einem Verankerungsabschnitt zur Verankerung im Boden.

In Fig. 8 ist eine alternative Befestigungsmöglichkeit zum aneinander Fixieren von zwei rechtwinklig zueinander angeordneten Seitenwänden gezeigt. Diese sind über zwei Winkelprofile 20 aneinander festgelegt, die die rechtwinklig zueinander angeordneten Seitenwände klemmend zwischen sich aufnehmen. Die beiden Winkelprofile wiederum sind über mehrere Schraubverbindungen aneinander fixiert, wobei im konkreten Fall, was bevorzugt ist, die Schrauben im Eckbereich der Winkelprofile vorgesehen sind, also unter einem 45°-Winkel zu den Flächenerstreckungen verlaufen.

### Bezugszeichenliste

- 1: Rank- und Bewässerungsvorrichtung
- 2: Substratplatte (bevorzugt Polycarbonatplatte)
- 3: Regenauffangdach
- 4: Auffangrinnen
- 5: Wandabschnitte
- 6: Wandabschnitte
- 7: untere Kanten
- 8: Durchgangslöcher
- 9: Ablauftüllen
- 10: schräge Rankstöcke
- 11: parallel zur Vertikalen angeordnete Rankstöcke
- 12: Boden
- 13: obere Kanten
- 14: Seitenwand, vorzugsweise aus Polycarbonat
- 15: Haltearme
- 16: Schraub-/Klemmverbindung
- 17: Verankerungsprofil
- 18: U-Profil
- 19: H-Profil
- 20: Winkelprofile

- α: nach oben aufgespannter Winkel der Wandabschnitte einer Auffangrinne
- β: Winkel zwischen schrägen Rankstöcken 10 und der Vertikalen

- a: lichte Breite
- b: lichte Breite
- c: Rastermaß

## Patentansprüche

1. Rank- und Bewässerungsvorrichtung (1) für Pflanzen, umfassend ein, von mehreren, vorzugsweise zumindest zum Teil schräg, bevorzugt unter einem Winkel zwischen 5° und 25° zur Vertikalen verlaufenden, Rankstöcken (10, 11) getragenes Regenauffangdach (3) aus einem lichtdurchlässigen Substrat, insbesondere aus Kunststoff,
wobei das Regenauffangdach (3) eine Anzahl von Durchgangslöchern (8) aufweist, die von den Rankstöcken (10, 11) durchsetzt sind, derart, dass das Wasser aus dem Regenauffangdach (3) durch die Durchgangslöcher (8) außen entlang der Rankstöcke (10, 11) nach unten in Richtung Wurzelwerk der Pflanzen strömen kann
und/oder
wobei dem Regenauffangdach (3) eine Anzahl von, vorzugsweise konisch konturierten, Ablauftüllen (9) zugeordnet sind, durch die das Wasser aus dem Regenauffangdach (3) in das Innere der als Höhlkörper ausgebildeten Rankstöcke (10, 11) und in den Rankstöcken (10, 11) nach unten in Richtung Wurzelwerk der Pflanzen strömen kann,
**dadurch gekennzeichnet,**
**dass** das Regenauffangdach (3) mehrere sich parallel erstreckende und einteilig ausgebildete Auffangrinnen (4) aufweist, die von einer gekanteten Platte (Substratplatte) (2) aus dem lichtdurchlässigen Substrat, bevorzugt aus einem Polycarbonat, gebildet sind.

2. Rank- und Bewässerungsvorrichtung nach Anspruch 1,
**dadurch gekennzeichnet,**
**dass** die Substratplatte (2) derart gekantet ist, dass die Auffangrinnen (4) jeweils zwei einen sich nach oben öffnenden Winkel (α) aufspannende, einteilige Wandabschnitte (5, 6) aufweisen, bevorzugt von diesen gebildet sind, und dass zwei einteilige, benachbarte Wandabschnitte (6, 5) von zwei benachbarten Auffangrinnen einen nach unten offenen Winkel aufspannen.

3. Rank- und Bewässerungsvorrichtung nach einem der Ansprüche 1 oder 2,
**dadurch gekennzeichnet,**
**dass** die zwei Wandabschnitte (5, 6) der Auffangrinnen (4) sich an jeweils einer unteren Kante (7) treffen und dass die Ablauftüllen (9) und/oder die Durchgangsöffnungen im Bereich der unteren Kanten (7) angeordnet sind.

4. Rank- und Bewässerungsvorrichtung nach einem der der vorhergehenden Ansprüche,
**dadurch gekennzeichnet,**
**dass** den Durchgangslöchern (8) und/oder Ablauftüllen (9) Staumittel zugeordnet sind, die das Wasser in den Auffangrinnen an einer Durchgangsloch- oder Ablauftüllenseite in Richtung der Längserstreckung der Auffangrinnen anstauen.

5. Rank- und Bewässerungsvorrichtung nach einem der vorhergehenden Ansprüche,
**dadurch gekennzeichnet,**
**dass** die gekantete Substratplatte (2) in einer Querschnittsansicht zickzackförmig ist.

6. Rank- und Bewässerungsvorrichtung nach einem der vorhergehenden Ansprüche,
**dadurch gekennzeichnet,**
**dass** das Regenauffangdach (3) eine einzige gekantete Substratplatte (2), insbesondere mit einer Flächenerstreckung von mindestens 4 m², vorzugsweise mindestens 8 m², noch weiter bevorzugt von mindestens 10 m² aufweist oder modulartig aus mehreren gekanteten Substratplatten (2), bevorzugt mit einer jeweiligen vorgenannten Mindestflächenerstreckung, zusammengesetzt ist.

7. Rank- und Bewässerungsvorrichtung nach einem der vorhergehenden Ansprüche,
**dadurch gekennzeichnet,**
**dass** die Haltearme (15) lösbar, insbesondere über einen Schraub-/Klemmechanismus (16) an den Haltearmen (15) fixiert sind.

8. Rank- und Bewässerungsvorrichtung nach einem der vorhergehenden Ansprüche,
**dadurch gekennzeichnet,**
**dass** die Rank- und Bewässerungsvorrichtung mindestens eine Seitenwand (14) aufweist, wobei bevorzugt die mindestens eine Seitenwand, weiter bevorzugt mehrere Seitenwände (14) mit den Haltearmen (15) durch Verschrauben oder Vernieten, verbunden ist/sind.

9. Rank- und Bewässerungsvorrichtung nach Anspruch 8,
**dadurch gekennzeichnet,**
**dass** zwei benachbarte Seitenwände (14) über ein doppeltes U-Profil, insbesondere ein H-Profil, aneinander fixiert sind und/oder dass eine Seitenwand (14) mit dem Regenauffangdach (3) und/oder zwei über Eck angeordnete Seitenwände (14) über ein zwei winklig aneinander fixierte U-Profilabschnitte aufweisendes Profil festgelegt sind und/oder dass eine Seitenwand (14) sich bodenseitig in einem U-Profilabschnitt eines Verankerungsprofils (17) abstützt, welches mit einem Ankerabschnitt im Erdboden verankerbar ist.

10. Rank- und/oder Bewässerungsvorrichtung nach einem der vorhergehenden Ansprüche,
**dadurch gekennzeichnet,**
**dass** die Rankstöcke (10, 11) aus Metall, insbesondere aus einer Aluminiumlegierung ausgebildet sind.

11. Rank- und Bewässerungsvorrichtung nach einem der vorhergehenden Ansprüche,
**dadurch gekennzeichnet,**
**dass** innere der Rankstöcke (10, 11) schräg zur Vertikalen und äußere, die Seitenwände tragende Rankstöcke (10, 11) parallel zur Vertikalen verlaufen.

12. Rank- und Bewässerungsvorrichtung nach einem der Ansprüche 8 bis 11,
**dadurch gekennzeichnet,**
**dass** mindestens eine Seitenwand (14) aus einem lichtdurchlässigen Substrat, insbesondere Kunststoff, bevorzugt aus einem Polycarbonat vorgesehen ist, die an mehreren der, vorzugsweise sich parallel zur Vertikalen erstreckenden, Rankstöcke (10, 11), insbesondere über an den Rankstöcken (10, 11) festgelegte, Haltearme (15), fixiert ist.

## Claims

1. Plant support and irrigation device (1) for plants, including a rain collecting roof (3) made of a translucent substrate, in particular a plastic material, supported by multiple dibbles (10, 11) running preferably at least partly inclined, preferably at an angle between 5° and 25° to the vertical,
wherein the rain collecting roof (3) comprises a number of through-openings (8), which are interspersed with the dibbles (10, 11) in such a way that the water from the rain collecting roof (3) can flow through the through-openings (8) along the outside of the dibbles (10, 11) downward in the direction of the root system of the plants
and/or
wherein a number of outlet spouts (9), preferably conically contoured, are assigned to the rain collecting roof (3), through which the water from the rain collecting roof (3) can flow into the inside of the dibbles (10, 11) formed as hollow bodies and downward inside the dibbles (10, 11) in the direction of the root system of the plants,
**characterized in that**
the rain collecting roof (3) comprises multiple integrally formed and parallel collecting gutters (4), which are formed by an edged plate (substrate plate) (2) made of the translucent substrate, preferably of a polycarbonate.

2. Plant support and irrigation device according to claim 1,
**characterized in that**
the substrate plate (2) is edged in such a way that the collecting gutters (4) each comprise two one-piece wall sections (5, 6) spanning an angle (α) opening upward, the gutters preferably by them, and **in that** two one-piece neighboring wall sections (5, 6) of two neighboring collecting gutters span an angle opening downward.

3. Plant support and irrigation device according to one of claims 1 or 2,
**characterized in that**
the two wall sections (5, 6) of the collecting gutters (4) meet in each case at a lower edge (7), and **in that** the outlet spouts (9) and/or the through-openings are arranged in the region of the lower edges (7).

4. Plant support and irrigation device (1) according to one of the preceding claims,
**characterized in that**
accumulation means are assigned to the through-openings (8) and/or the outlet spouts (9), which accumulate the water in the collecting gutters on a through-opening side or an outlet spout side in the direction of the longitudinal extent of the collecting gutters.

5. Plant support and irrigation device according to one of the preceding claims,
**characterized in that**
the edged substrate plate (2) has a zigzag shape in a cross-sectional view.

6. Plant support and irrigation device according to one of the preceding claims,
**characterized in that**
the rain collecting roof (3) comprises one single, edged substrate plate (2), in particular with a surface area of at least 4 m², preferably at least 8 m², further preferably at least 10 m², or is composed of multiple edged substrate plates (2) in a modular fashion, preferably with a respective minimum surface area mentioned above.

7. Plant support and irrigation device according to one of the preceding claims,
**characterized in that**
the holding arms (15) are detachably fixed, in particular via a screw/clamp mechanism (16) at the holding arms (15).

8. Plant support and irrigation device according to one of the preceding claims,
**characterized in that**
the plant support and irrigation device comprises at least one side wall (14), wherein preferably the at least one side wall, further preferred multiple side walls (14) is/are connected to the holding arms (15) by means of screwing or riveting.

9. Plant support and irrigation device (1) according to claim 8,
**characterized in that**
two neighboring side walls (14) are fixed to one another via a double U-profile, in particular an H-profile, and/or **in that** a side wall (14) with the rain collecting roof (3) and/or two side walls (14) arranged at angles are secured via a profile comprising two U-profile sections fixed at an angle to one another, and/or **in that** a side wall (14) is supported on the ground side in a U-profile section of an anchoring profile (17) which can be anchored in the ground with an anchoring portion.

10. Plant support and irrigation device according to one of the preceding claims,
**characterized in that**
the dibbles (10, 11) are formed of metal, in particular of an aluminum alloy.

11. Plant support and irrigation device according to one of the preceding claims,
**characterized in that**
inner ones of the dibbles (10, 11) run obliquely to the vertical and outer dibbles (10, 11) supporting the side walls run in parallel to the vertical.

12. Plant support and irrigation device according to one of claims 8 to 11,
**characterized in that**
at least one side wall (14) of a translucent substrate, in particular of a plastic material, preferably of a polycarbonate, is provided, which is fixed to multiple of the dibbles (10, 11) preferably extending parallel to the vertical, in particular via holding arms (15) secured to the dibbles (10, 11).

## Revendications

1. Dispositif de tuteurage et d'irrigation (1) pour des plantes, comprenant un toit de collecte d'eau de pluie (3) en un matériau perméable à la lumière, en particulier en matière plastique, soutenu par plusieurs tuteurs (10, 11) s'étendant de préférence au moins pour partie en oblique, de préférence sous un angle compris entre 5° et 25° par rapport à la verticale,
dans lequel le toit de collecte d'eau de pluie (3) présente un certain nombre de trous de passage (8), qui sont traversés par les tuteurs (10, 11), de telle manière que l'eau provenant du toit de collecte d'eau de pluie (3) puisse s'écouler à travers les trous de passage (8) extérieurement le long des tuteurs (10, 11) vers le bas en direction du système radiculaire des plantes,
et/ou
dans lequel un certain nombre de becs d'évacuation (9), de préférence de forme conique, sont associés au toit de collecte d'eau de pluie (3), par lesquels l'eau provenant du toit de collecte d'eau de pluie (3) peut s'écouler à l'intérieur des tuteurs (10, 11) réalisés sous forme de corps creux et dans les tuteurs (10, 11) vers le bas en direction du système radiculaire des plantes,
**caractérisé en ce que** le toit de collecte d'eau de pluie (3) présente plusieurs rigoles de collecte (4) s'étendant en parallèle et réalisées d'une seule pièce, qui sont formées par une plaque pliée (plaque de substrat) (2) constituée du substrat perméable à la lumière, de préférence en un polycarbonate.

2. Dispositif de tuteurage et d'irrigation selon la revendication 1, **caractérisé en ce que** la plaque de substrat (2) est pliée de telle manière que les rigoles de collecte (4) présentent respectivement deux parties de paroi en une seule pièce (5, 6), formant un angle (α) s'ouvrant vers le haut, et soient de préférence formées par celles-ci, et **en ce que** deux parties de paroi (6, 5) voisines en une seule pièce de deux rigoles de collecte voisines forment un angle s'ouvrant vers le bas.

3. Dispositif de tuteurage et d'irrigation selon une des revendications 1 ou 2, **caractérisé en ce que** les deux parties de paroi (5, 6) des rigoles de collecte (4) se rejoignent respectivement à une arête inférieure (7) et **en ce que** les becs d'évacuation (9) et/ou les ouvertures de passage sont disposé(e)s dans la région des arêtes inférieures (7).

4. Dispositif de tuteurage et d'irrigation selon l'une quelconque des revendications précédentes, **caractérisé en ce que** des moyens d'accumulation sont associés aux tous de passage (8) et/ou aux becs d'évacuation (9), qui retiennent l'eau dans les rigoles de collecte sur un côté des trous de passage ou des becs d'évacuation dans la direction de l'extension longitudinale des rigoles de collecte.

5. Dispositif de tuteurage et d'irrigation selon l'une quelconque des revendications précédentes, **caractérisé en ce que** la plaque de substrat pliée (2) présente une section transversale en forme de zigzag.

6. Dispositif de tuteurage et d'irrigation selon l'une quelconque des revendications précédentes, **caractérisé en ce que** le toit de collecte d'eau de pluie (3) présente une seule plaque de substrat pliée (2), en particulier avec une extension de surface d'au moins 4 m², de préférence d'au moins 8 m², de préférence encore d'au moins 10m² ou est composée de façon modulaire de plusieurs plaques de substrat pliées (2), de préférence avec une extension de surface minimale précitée respective.

7. Dispositif de tuteurage et d'irrigation selon l'une quelconque des revendications précédentes, **caractérisé en ce que** les bras de maintien (15) sont fixés de façon détachable, en particulier par un mécanisme de vis/serrage (16) aux bras de maintien (15).

8. Dispositif de tuteurage et d'irrigation selon l'une quelconque des revendications précédentes, **caractérisé en ce que** le dispositif de tuteurage et d'irrigation présente au moins une paroi latérale (14), dans lequel de préférence ladite au moins une paroi latérale, de préférence encore plusieurs parois latérales (14), est/sont assemblée(s) aux bras de maintien (15) au moyen de vis ou de rivets.

9. Dispositif de tuteurage et d'irrigation selon la revendication 8, **caractérisé en ce que** deux parois latérales voisines (14) sont fixées l'une à l'autre au moyen d'un profilé en U double, en particulier un profilé en H, et/ou **en ce qu'**une paroi latérale est fixée au toit de collecte d'eau de pluie (3) et/ou deux parois latérales disposées en coin (14) sont fixées par un profilé présentant deux parties de profilé en U fixées l'une à l'autre avec un angle et/ou **en ce qu'**une paroi latérale (14) s'appuie au sol dans une partie de profilé en U d'un profilé d'ancrage (17), qui peut être ancré dans le sol par une partie d'ancrage.

10. Dispositif de tuteurage et d'irrigation selon l'une quelconque des revendications précédentes, **caractérisé en ce que** les tuteurs (10, 11) sont réalisés en métal, en particulier en un alliage d'aluminium.

11. Dispositif de tuteurage et d'irrigation selon l'une quelconque des revendications précédentes, **caractérisé en ce que** des tuteurs intérieurs des tuteurs (10, 11) s'étendent en oblique par rapport à la verticale et des tuteurs extérieurs des tuteurs (10, 11) soutenant les parois latérales s'étendent parallèlement à la verticale.

12. Dispositif de tuteurage et d'irrigation selon l'une quelconque des revendications 8 à 11, **caractérisé en ce qu'**il est prévu au moins une paroi latérale (14) en un substrat perméable à la lumière, en particulier en matière plastique, de préférence en un polycarbonate, qui est fixée à plusieurs des tuteurs (10, 11) s'étendant de préférence parallèlement à la verticale, en particulier au moyen de bras de maintien (15) attachés aux tuteurs (10, 11).
